# FASCICULE DE BREVET EUROPEEN

(11) **EP 0 395 507 B1**
(45) Date de publication et mention de la délivrance du brevet: **06.04.1994**
(21) Numéro de dépôt: 90401124.4
(22) Date de dépôt: 25.04.1990
(51) Int. Cl.: H04N 11/04

(54) **Système d'émission-réception pour la transmission d'images couleur animées et du son à partir de canaux indépendants**
Sende- und Empfangssystem zum Übertragen von beweglichen Farbbildern und Ton über unabhängige Kanäle
Transmission and reception system for the transmission of moving colour pictures and sound through independent channels

(30) Priorité: 28.04.1989 FR 8905713
(43) Date de publication de la demande: 31.10.1990
(73) Titulaire: FRANCE TELECOM, 75015 Paris (FR)
(72) Inventeur: Guichard, Jacques, F-75015 Paris (FR); Eude, Gérard, F-77200 Torcy (FR)
(74) Mandataire: Dubois-Chabert, Guy

(56) Documents cités:
- EP-A- 0 312 434
- WO-A-88/10045
- IEEE TRANSACTIONS ON CONSUMER ELECTRONICS, Vol. 34, No. 1, février 1988, pages 156-164, IEEE, New York, US; J. JALALI et al.: "A component codec and line multiplexer"
- TECHNISCHE MITTEILUNGEN DES RFZ, Vol. 31, No. 4, 1987, pages 73-76, Berlin, DD; D. HÄNSSGEN: "Der Digitalkodek in der Bildkanaltechnik - ein Überblick"

## Description

La présente invention a pour objet un système d'émission-réception pour la transmission d'images couleur animées et du son à partir de canaux indépendants.

Elle trouve une application générale en transmission d'images et notamment pour des services devant, dans un avenir proche, être assurés par le réseau téléphonique numérique commuté (RNIS), tels que la visioconférence, la visioréunion, la visiophonie.

En effet, les progrès réalisés ces dernières années dans le domaine des composants électroniques et des processeurs de traitement de signal ont conduit à des techniques de réduction d'information (dites aussi de codage d'images) de plus en plus sophistiquées. Ces progrès vont donc permettre de réaliser de tels services à partir de canaux de transmission à des débits aussi bas que 64 kbit/s.

Ces techniques, qui mettent en jeu diverses transformations (de Hadamard, de Haar, en cosinus, en sinus, etc.) sont décrites dans l'article de J. Guichard et D. Nasse intitulé "L'image numérique et le codage ", publié dans la revue "L'écho des Recherches" n° 126, 4ème trimestre 1986, pp. 21-36.

On peut en trouver également une description dans les demandes de brevets français FR-A-2589020, FR-A-2599577 et FR-A-2597282.

En ce qui concerne le son, il existe des codeurs qui, à partir d'un signal analogique, délivrent des informations binaires aux débits de 64 kbit/s, 56 kbit/s, 48 kbit/s, 32 Kbit/s, 16 kbit/s et bientôt 8 kbit/s et moins. Bien sûr, la qualité de la parole transmise dépend du débit et du taux de compression du codeur.

En ce qui concerne l'image, un effort très important de réduction de débit a été entrepris depuis plusieurs années et l'on voit apparaître actuellement des codeurs-décodeurs d'images aux débits de 112 kbit/s, 96 kbit/s, 64 kbit/s, 56 kbit/s, 48 kbit/s, etc. De même que pour le son, la qualité des images observées dépend du taux de compression, du format de l'image de départ, de l'algorithme de codage et du débit final.

En ce qui concerne l'accès de base, les débits offerts par le réseau téléphonique commuté à intégration de services (RNIS) sont deux fois 64 kbit/s pour le son et l'image, plus 16 kbit/s pour les données. Le concepteur de services d'images animées dispose donc de 128 kbit/s pour transmettre les signaux d'images et de son.

Ces 128 kbit/s se présentent sous la forme de deux canaux, à 64 kbit/s indépendants, c'est-à-dire qu'ils empruntent des chemins différents dans le réseau. Au cours de la communication, des informations émises en phase n'arrivent pas au même instant au récepteur. Le déphasage dans le réseau terrestre peut atteindre 10 à 20 millisecondes.

Ce problème de désynchronisation a conduit les concepteurs de systèmes visiophoniques à utiliser 64 kbit/s pour le son et 64 kbit/s pour l'image : un déphasage de plus ou moins 70 ms entre le son et le mouvement des lèvres est en effet tolérable.

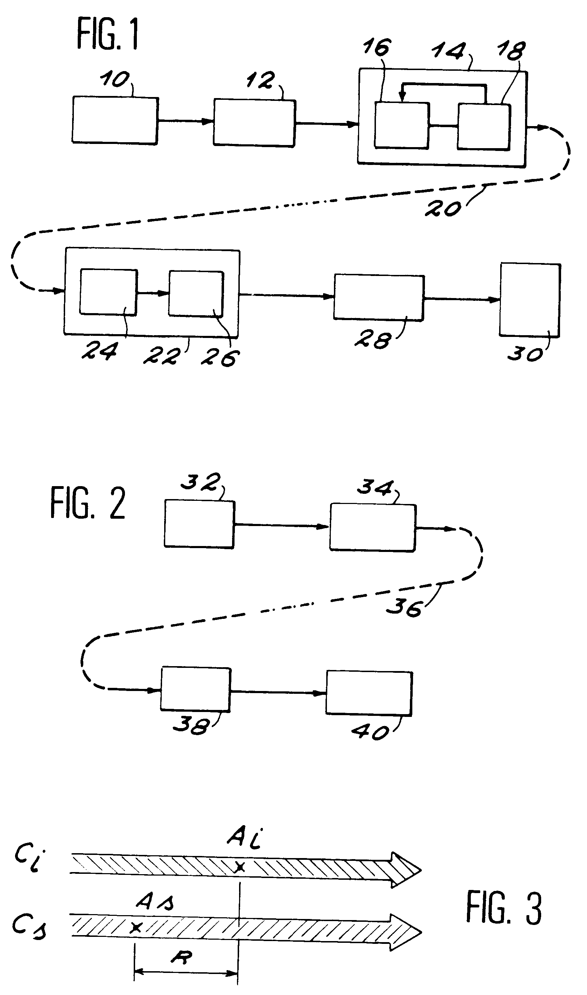

L'exemple d'un tel système est décrit dans ce qui suit en regard des figures 1, 2 et 3.

La figure 1 représente un ensemble de traitement et de transmission d'images. Cet ensemble comprend :
- une voie d'émission constituée par un moyen 10 de prise d'images, une mémoire pré-tampon 12 (dite parfois "prebuffer"), cette mémoire étant écrite par un signal d'image à une certaine fréquence F et lue à une fréquence F/N, cette mémoire pré-tampon 12 délivrant un signal correspondant à une image sur N, un moyen de codage d'image 14 comprenant un codeur 16 et une mémoire tampon 18, ce moyen délivrant un signal numérique d'image codée,
- une ligne de transmission 20,
- une voie de réception constituée par un moyen de décodage 22 recevant le signal numérique d'image codée transmis, ce moyen comprenant un décodeur 26 et une mémoire tampon 24 et délivrant un signal d'image décodée à une fréquence F/N, un moyen 28 pour répéter N fois le signal d'image décodée et un moyen 30 d'affichage des images restituant des séquences de N images identiques.

La figure 2 illustre un ensemble de traitement du son. Cet ensemble comprend :
- une voie d'émission constituée par un moyen 32 de prise de son, un codeur de son 34 délivrant un signal numérique de son,
- une ligne de transmission 36,
- une voie de réception constituée par un décodeur de son 38, et un moyen de restitution du son 40.

Les moyens 10, 12, 14 pour la voie image et 32, 34 pour la voie son constituent ce que l'on appelle un ensemble d'émission. Les moyens 22, 28 et 30 pour la voie image et 32, 34 pour la voie son constituent ce que l'on appelle un ensemble de réception.

Ces deux ensembles fonctionnent en parallèle et constituent deux canaux indépendants ayant chacun un débit de 64 kbit/s. La figure 3 montre un canal image Ci et un canal son Cs, parallèles et identiques.

Cependant, pour atteindre 64 kbit, les taux de compression des codeurs d'images et de son ne sont pas du même ordre de grandeur. En effet, avant compression, il existe un rapport d'environ mille entre les bandes passantes d'un signal vidéo et d'un signal sonore.

La présente invention a pour but de remédier au problème de désynchronisation tout en remédiant en même temps au problème de la transmission de signaux ayant des taux de compression très différents.

La présente invention a donc pour objet un système d'émission-réception pour la transmission d'images couleur consistant à répartir le signal image sur deux canaux indépendants, le signal de luminance occupant un canal, le signal de chrominance regroupé avec le signal son occupant l'autre canal.

La présente invention a plus particulièrement pour objet un système d'émission-réception pour la transmission d'images couleur animées et du son à partir de canaux indépendants comprenant :
A) - un ensemble d'émission constitué par :
   - des moyens de traitement d'images comportant un moyen de prise d'images, des moyens de codage d'images,
   - des moyens de traitement de son comportant un moyen de prise de son et des moyens de codage du son,
B) - un ensemble de réception constitué par :
   - des moyens de traitement d'image comprenant des moyens de décodage recevant le signal numérique codé transmis,
   - un moyen d'affichage d'images,
   - des moyens de traitement du son comportant des moyens de décodage et de restitution du son,
C) - un ensemble de transmission comportant des moyens de transmission des signaux numériques délivrés par l'ensemble d'émission,

caractérisé en ce que :
A) - dans l'ensemble d'émission, les moyens de traitement d'images comportent des voies indépendantes de traitement, l'une pour le signal de luminance, l'autre pour le signal de chrominance, le signal son et le signal de chrominance étant multiplexés ;
B) - dans l'ensemble de réception, les moyens de traitement d'images comportent des voies indépendantes de traitement, l'une pour le signal de luminance, l'autre pour le signal de chrominance, le signal son et le signal de chrominance étant démultiplexés ;
C) - dans l'ensemble de transmission, les moyens de transmission comportent deux canaux de transmission indépendants, dont l'un permet de transmettre le signal de luminance et dont l'autre permet de transmettre les signaux multiplexés de chrominance et de son ;

et caractérisé en ce que le signal de luminance et de chrominance d'une image, émis en phase sont traités à la réception pour être appliqués aux moyens d'affichage en phase.

De toute façon, les caractéristiques de l'invention apparaîtront mieux après la description qui va suivre, donnée à titre explicatif et nullement limitatif.

Cette description se réfère à des dessins annexés, sur lesquels :
- la figure 1, déjà décrite, représente un ensemble d'émission-réception pour la transmission d'images selon l'art antérieur,
- la figure 2, déjà décrite, représente un ensemble d'émission-réception selon l'art antérieur,
- la figure 3, déjà décrite, montre deux canaux image et son pour la transmission d'images et de son selon l'art antérieur,
- la figure 4 représente un ensemble d'émission-réception pour la transmission de signaux d'images et de son conformément à l'invention,
- la figure 5 représente un exemple détaillé de réalisation des moyens de codage des signaux de luminance, chrominance et son conformément à l'invention,
- les figures 6 et 7 représentent un diagramme illustrant le déroulement du traitement à la réception, selon respectivement un premier et un deuxième mode de réalisation.

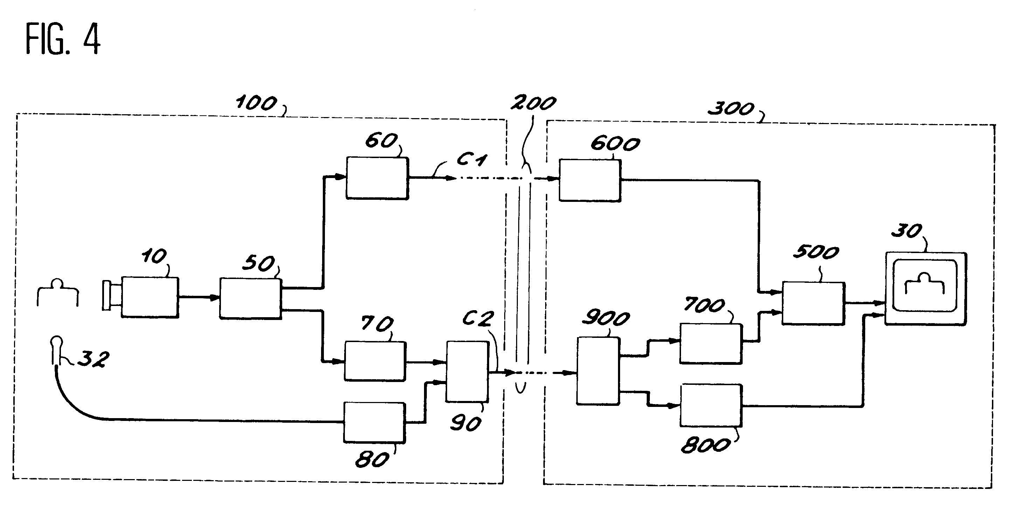

Le schéma représenté sur la figure 4 représente le schéma d'un système d'émission-réception pour la transmission de signaux d'images couleur animées et du son conformément à l'invention.

Le système comporte un ensemble d'émission 100 se distinguant de l'ensemble d'émission de l'art antérieur par le fait qu'il comporte un séparateur 50 de signaux de luminance et de chrominance, par le fait que les moyens de traitement d'images comportent deux voies de traitement, l'une pour le signal de luminance et l'autre pour le signal de chrominance, et par le fait que la voie de traitement du signal de chrominance est combinée à la voie de traitement du son afin de multiplexer ces deux signaux sur un même canal de transmission C2.

Chaque voie de traitement du signal, que ce soit la voie son, la voie luminance ou la voie de chrominance, comporte des moyens de codage 60, 70, 80 délivrant des signaux numériques.

Les signaux de sortie des moyens de codage 70 et 80 sont multiplexés au moyen d'un multiplexeur 90.

Le signal numérique de sortie des moyens de codage 60 occupe un canal C1.

Dans l'exemple d'un système applicable à la visiophonie les canaux C1 et C2 sont des canaux à 64 kbit/s.

Les moyens de transmission sont constitués par deux lignes de transmission 200 par exemple.

Le système comporte en outre un ensemble de réception 300 se distinguant du système de l'art antérieur par le fait qu'il comprend un mélangeur 500 de signaux de luminance et de chrominance, par le fait que les moyens de traitement d'images comprennent deux voies de traitement : l'une pour le signal de luminance, l'autre pour le signal de chrominance, et par le fait qu'un démultiplexeur permet de restituer le signal de chrominance séparément du signal son.

Selon un aspect de l'invention, les moyens de décodage 600, 700 comportent des décodeurs d'images classiques mais dont les durées variables de décodage d'une image sont mises à profit pour absorber le retard de l'ordre de 10 à 20 millisecondes qu'il peut y avoir entre les signaux issus des deux canaux indépendants C1 et C2.

Ainsi, les signaux de luminance et de chrominance sont synchronisés au moment de la visualisation de l'image totale, le signal son étant synchrone au signal de chrominance.

Cette synchronisation se fait sur toutes les images selon une première variante de réalisation consistant à émettre le même nombre d'images de luminance et de chrominance, ou sur les images émises en phase selon une deuxième variante de réalisation consistant à émettre davantage d'images couleur. La synchronisation est obtenue alors en moyenne (images de luminance et de chrominance émises en phase une fois sur deux par exemple, ce qui est le cas lorsque les images de luminance sont émises sur la base de 10 Hz et les images de chrominance sur la base de 25 Hz). Cette deuxième variante de réalisation permet d'envoyer davantage d'images couleur pour une image "noir et blanc" et par conséquent de donner l'illusion d'un mouvement continu. Elle permet bien entendu de conserver en moyenne les avantages du traitement séparé de la luminance et de la chrominance, c'est-à-dire de permettre une absorption du retard des signaux entre les deux canaux C1 et C2.

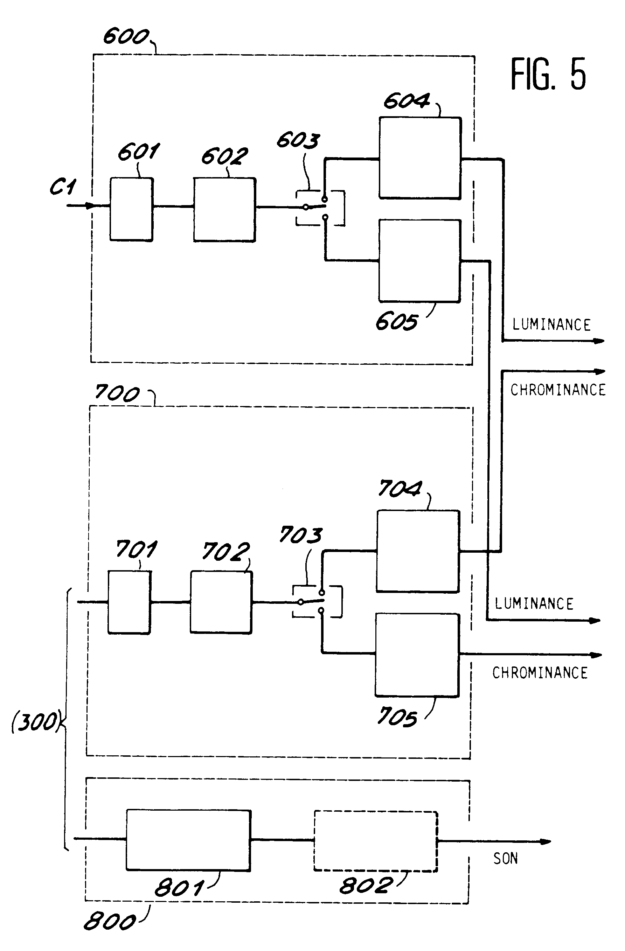

Sur la figure 5, on a représenté un exemple plus détaillé des moyens de décodage de l'ensemble réception.

Les moyens de décodage 600 du signal de luminance issu du canal C1 comportent une mémoire tampon 601, un décodeur 602, un dispositif de commutation 603, et au moins deux mémoires d'images à lecture et écriture 604 et 605.

Les moyens de décodage 700 du signal de chrominance sont identiques aux précédents. Ils comportent donc une mémoire tampon 701, un décodeur 702, un dispositif de commutation 703, et au moins deux mémoires d'images à lecture et écriture 704 et 705.

Les moyens de décodage du signal son comportent essentiellement un décodeur 801 et un circuit à retard 802 (dans le cas où un tel circuit n'a pas été prévu dans les moyens de codage du signal son). Le circuit 802 permet de compenser la durée de traitement de l'image.

Les moyens de codage de l'ensemble émission ne sont pas détaillés car ils se déduisent aisément à partir des moyens de réception, puisqu'ils réalisent un traitement inverse.

Par ailleurs, les moyens de codage comportent en outre des circuits de conversion analogique-numérique non représentés permettant de transformer les signaux de luminance et chrominance en signaux analogiques.

De la même façon, les moyens de décodage comportent en outre des circuits de conversion numérique-analogique non représentés permettant de transformer les signaux de luminance et de chrominance en signaux analogiques.

Pour la réalisation pratique des codeurs et des décodeurs, on pourra se reporter à la demande de brevet français intitulée "Procédé de codage par transformation pour la transmission de signaux d'image" publié sous le n° 2 599 577.

Le circuit à retard 802 est réalisé par exemple par une ligne à retard introduisant un retard sensiblement égal à la durée supplémentaire du traitement image.

Comme cela a été dit précédemment, le retard qu'il y a entre la durée des décodages d'un signal de luminance et celui d'un signal de chrominance est utilisé pour compenser le retard introduit lors de la transmission sur deux canaux indépendants.

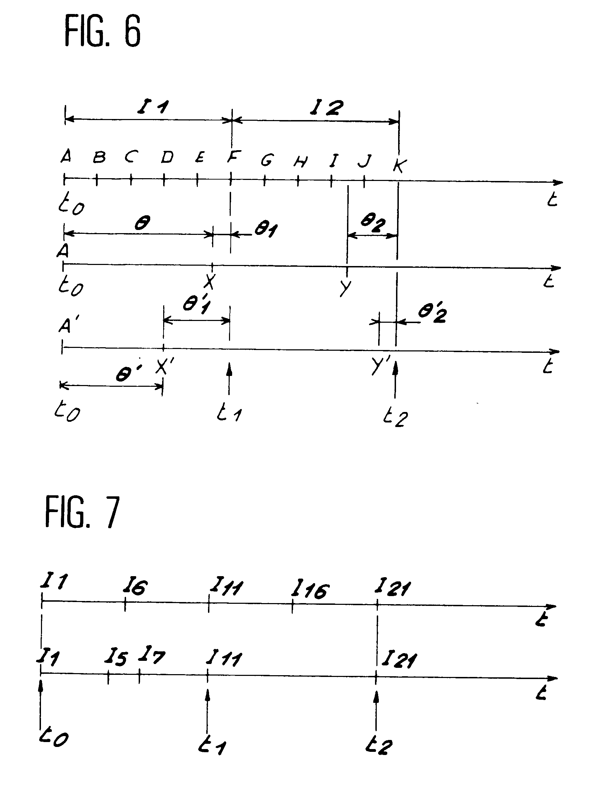

Sur la figure 6, un diagramme permet d'illustrer le mécanisme du retard variable et les instants de commutation dans le cas du premier exemple de réalisation selon lequel les images "noir et blanc" (luminance) sont émises avec la même fréquence et en synchronisme avec les images couleur.

L'instant tₒ correspond à l'instant auquel les décodeurs 602, 702, 802 sont admis à décoder.

Chaque image couleur et "noir et blanc" est répétée (lue) N fois pour avoir une fréquence d'affichage F, F/N étant la fréquence d'images décodées (et également codées).

Dans l'exemple de signaux d'images animées à 64 kbit/s, ces signaux sont à l'origine des signaux comprenant 50 (ou 60) trames entrelacées par seconde, le codeur d'images n'étant en général pas capable de traiter 50 images par seconde sans échantillonner temporellement le signal, il ne traite par exemple que 10 images par seconde.

Les images sont comprimées, transmises, puis décomprimées pour donner un signal à 10 Hz. Pour reconstruire le signal à 50 Hz (ou 60 Hz), on procède comme suit :
- les décodeurs 602 et 702 remplissent chacun, au fur et à mesure qu'ils reçoivent les informations (dès autorisation de décodage, c'est-à-dire à l'instant tₒ), une mémoire d'images, soit respectivement 604 et 704 ;
- dès que cette image est décodée, soit l'image I1, cette image est lue N fois, soit cinq fois (ou six fois), par le dispositif d'affichage ;
- pendant l'opération précédente (de lecture), les décodeurs remplissent chacun la deuxième mémoire d'images 605 (705) correspondant à l'image décodée suivante I2, puis, lorsque cette opération est terminée, elle est alors lue 5 fois (respectivement 6), etc.

Chaque décodeur dispose donc de deux mémoires d'images qu'il remplit alternativement d'images décodées à 10 Hz. Ces deux mémoires sont également lues alternativement 5 fois (respectivement 6) par le dispositif de visualisation.

Le temps mis par chaque décodage pour remplir chaque mémoire d'images est variable car il dépend du contenu de l'image codée (tous les blocs de l'image ne sont pas obligatoirement codés), mais aussi de la puissance de calcul du décodeur. Ce temps est inférieur à la durée mise pour répéter N fois ladite image (N=5 ou 6).

Le temps mis pour le décodage du signal "noir et blanc" a une durée ϑ.

Le temps mis pour le décodage du signal couleur a une durée généralement inférieure ϑ′.

Selon cet exemple, chaque image est répétée cinq fois et l'on a référencé I1, I2,..., la succession des images à 10 Hz.

Les instants A, B, C,..., représentent les instants où le système de visualisation est autorisé à afficher une nouvelle image. La fréquence d'affichage est de 50 Hz, la première image est visualisée 5 fois durant le temps AF.

Pendant ce temps, le décodeur 602 décode l'image suivant I2 pendant une durée AX : cette durée n'est pas forcément égale à AF. Elle dépend du contenu de l'image et de la puissance de calcul du décodeur. La technique de retard variable, autorise à visualiser au bout de la durée ϑ + ϑ₁, c'est-à-dire à l'instant F car AX<AF.

La première image est répétée 5 fois, mais une autre image pourra être répétée 4 fois dans le cas où AX<AE par exemple.

Il existe donc un temps variable ϑ₁, soit ϑ′₁, soit ϑ₂ selon le cas, qui peut être mis à profit pour absorber le déphasage entre les canaux C1 et C2 à 64 kbit.

Dans l'exemple donné, l'image couleur pourrait être visualisée à partir de l'instant E : il est plus intéressant de ne pas le faire et d'attendre l'instant F de façon à présenter sur l'écran la nouvelle image "noir et blanc" en même temps que la nouvelle image couleur. Le retard introduit dans le décodage de la couleur ne présente pas d'inconvénient majeur. En effet, pendant que le décodeur couleur 702 ne fait rien, les informations de couleur qui arrivent sur la ligne de transmission sont accumulées dans la mémoire tampon 701 qui est choisie en conséquence.

La commutation en écriture ou lecture de la mémoire 604 à la mémoire 605 et de la mémoire 704 à la mémoire 705 s'effectue à l'instant t₁. Une autre commutation aura lieu à l'instant t₂.

Le deuxième exemple de réalisation tient compte du fait que le signal couleur représente environ 15% du signal luminance après codage, le partage des deux canaux C1 et C2 en 64 kbit/s pour la luminance et 32 kbit/s ou 48 kbit/s pour la chrominance (32 kbit/s ou 16 kbit/s pour le son) ne reflète pas le pourcentage précédent.

C'est pourquoi tout en restant dans le cadre de l'invention, il est proposé de transmettre davantage d'images couleur que d'images "noir et blanc" si, comme dans l'exemple précédent, les images luminance sont transmises à une fréquence FN=10Hz (une image sur 5, respectivement une sur 6), les images chrominance peuvent être transmises à une fréquence F/Q soit à 12,5 Hz, soit à 16,66 Hz, soit à 25 Hz, soit à 50 Hz (respectivement 15 Hz, 20 Hz, 30 Hz ou 60 Hz).

La compensation du déphasage du réseau n'est plus alors assurée qu'en moyenne. Les images luminance et chrominance qui seront visualisées en phase correspondent à celles qui auront été émises en phase. Par exemple, les images luminance sont émises sur une base de 10 Hz et les images chrominance à 25 Hz tel que représenté sur la figure 7.

La numérotation des images I1, I2, etc. représente respectivement la succession des images "noir et blanc" et des images couleur à 50 Hz.

On peut donc voir que les images luminance et chrominance sont présentées en phase une fois sur deux.

Les instants de commutation ont lieu en tₒ, t₁, t₂.

## Revendications

1. Système d'émission-réception pour la transmission d'images couleur animées et du son à partir de canaux indépendants comprenant :
A) - un ensemble d'émission constitué par :
- des moyens de traitement d'images comportant un moyen de prise d'images (10), des moyens de codage d'images (60, 70),
- des moyens de traitement de son comportant un moyen de prise de son (32) et des moyens de codage du son (80),
B) - un ensemble de réception constitué par :
- des moyens de traitement d'image comprenant des moyens de décodage d'images (600, 700) recevant le signal numérique codé transmis,
- un moyen d'affichage d'images (30),
- des moyens de traitement du son comportant des moyens de décodage (800) et de restitution du son (30),
C) - un ensemble de transmission comportant des moyens de transmission (200) des signaux numériques délivrés par l'ensemble d'émission,
caractérisé en ce que :
A) - dans l'ensemble d'émission, les moyens de traitement d'images comportent des voies indépendantes de traitement, l'une pour le signal de luminance, l'autre pour le signal de chrominance, le signal son et le signal de chrominance étant multiplexés ;
B) - dans l'ensemble de réception, les moyens de traitement d'images comportent des voies indépendantes de traitement, l'une pour le signal de luminance, l'autre pour le signal de chrominance, le signal Son et le signal de chrominance étant démultiplexés ;
C) dans l'ensemble de transmission, les moyens de transmission comportent deux canaux de transmission indépendants (C1, C2), dont l'un permet de transmettre le signal de luminance et dont l'autre permet de transmettre les signaux multiplexés de chrominance et de son ;
et caractérisé en ce que les signaux de luminance et de chrominance d'une image émis en phase sont traités à la réception pour être appliqués aux moyens d'affichage en phase.

2. Système selon la revendication 1, caractérisé en ce que :
A) dans l'ensemble émission :
- les moyens de traitement d'images comportent en outre un séparateur (50) de signaux de luminance et chrominance,
- les deux voies indépendantes de traitement comportent chacune des moyens de codage, l'un (60) pour coder le signal de luminance, l'autre (70) pour coder le signal de chrominance,
- un multiplexeur (90) permet de multiplexer les signaux de chrominance et de son,
B) dans l'ensemble réception :
- les moyens de traitement d'images comportent en outre un mélangeur (500) de signaux de luminance et de chrominance,
- les deux voies indépendantes de traitement comportent chacune des moyens de décodage, l'un (600) pour décoder le signal de luminance, l'autre (700) pour décoder le signal de chrominance,
- un démultiplexeur (900) permet de démultiplexer les signaux de chrominance et de son.

3. Système selon la revendication 1 ou 2, caractérisé en ce que les moyens de décodage (600) du signal de luminance comportent :
- un décodeur (602), délivrant le signal de luminance décodé à une fréquence F/N,
- une première (604) et une deuxième (605) mémoire d'images dans lesquelles sont stockés alternativement le signal de luminance correspondant à une image, ces mémoires étant lues alternativement,
- des moyens de commutation (603) permettant de commuter d'une mémoire à l'autre ; caractérisé en ce que les moyens de décodage (700) du signal de chrominance comportent :
- un décodeur (702) délivrant le signal de chrominance décodé à une fréquence F/Q, Q pouvant être égal à N,
- une première (704) et une deuxième (705) mémoires d'images dans lesquelles est stocké alternativement le signal de chrominance correspondant à une image, ces mémoires étant lues alternativement Q fois ;
et caractérisé en ce que la commutation d'une mémoire à l'autre pour la lecture après décodage d'un signal de luminance et d'un signal de chrominance correspondant à la même image ou à une autre image se fait en phase pour des signaux émis en phase.

4. Système selon la revendication 3, caractérisé en ce que les nombres P et Q sont égaux, le nombre d'images "noir et blanc" émises correspondant au nombre d'images couleur émises.

5. Système selon la revendication 3, caractérisé en ce que les nombres P et Q sont différents, le nombre Q étant supérieur au nombre P de manière à ce que le nombre d'images couleur émises soit supérieur au nombre d'images "noir et blanc" émises.

6. Système selon l'une quelconque des revendications 1 à 5, caractérisé en ce que le débit des signaux sur chaque canal est de 64 kbit /s.

7. Système selon l'une quelconque des revendications 1 à 6, caractérisé en ce que le débit total du canal transportant le signal de chrominance et le signal son est réparti de manière à avoir 32 kbit /s pour la chrominance et 32 kbit /s pour le son, ou de manière à avoir 48 kbit /s pour la chrominance et 16 kbit /s pour le son.

## Patentansprüche

1. Sende- und Empfangssystem zum Übertragen von beweglichen Farbbildern und Ton über unabhängige Kanäle, welches:
A) - eine Sendeeinheit umfaßt, die gebildet wird aus:
- Bildverarbeitungsmitteln, die ein Bilderstellungsmittel (10) und Bildcodierungsmittel (60, 70) umfassen,
- Tonverarbeitungsmitteln, welche ein Tonerstellungsmittel (32) und Tonkodierungsmittel (80) umfassen,
B) - eine Empfängereinheit umfaßt, die gebildet wird aus:
- Bildverarbeitungsmitteln, die Bilddecodierungsmittel (600, 700) umfassen, welche das übermittelte codierte numerische Signal empfangen,
- ein Bildanzeigemittel (30);
- Tonverarbeitungsmittel, welche Mittel zur Decodierung (800) und zur Tonwiederherstellung (30) umfassen,
C) - eine Übertragungseinheit umfaßt, die Übertragungsmittel (200) der von der Sendeeinheit gelieferten numerischen Signale umfaßt,
dadurch gekennzeichnet, daß:
A) - in der Sendeeinheit die Bildverarbeitungsmittel unabhängige Kanäle zur Bearbeitung umfassen, einen für das Lichtsignal, den anderen für das Farbtonsignal, wobei die Übertragungskanäle des Tonsignals und des Farbtonsignals entbündelt wurden;
B) - in der Empfängereinheit die Bildverarbeitungsmittel unabhängige Kanäle zur Bearbeitung umfassen, einen für das Lichtsignal, den anderen für das Farbtonsignal, wobei die Übertragungskanäle des Tonsignals und des Farbtonsignals entbündelt wurden;
C) - in der Übertragungseinheit die Übertragungsmittel zwei unabhängige Übertragungskanäle (C1, C2) umfassen, wovon einer die Übertragung des Lichtsignals ermöglicht und wovon der andere die Übertragung der in den Übertragungskanälen gebündelten Farbton-und Ton-Signale ermöglicht;
und dadurch gekennzeichnet, daß die Licht- und Farbtonsignale eines in Phase emittierten Bildes beim Empfang verarbeitet werden, um für Anzeigemittel in Phase verwendet zu werden.

2. System gemäß Anspruch 1, dadurch gekennzeichnet, daß: A) in der Sendeeinheit:
- die Bildverarbeitungsmittel außerdem einen Separator (50) der Licht- und Farbton-Signale umfassen,
- die beiden unabhängigen Bearbeitungskanäle jeweils Codiermittel umfassen, eines (60), um das Lichtsignal zu codieren, das andere (70), um das Farbtonsignal zu codieren,
- ein Multiplexer (90) es ermöglicht, die Übertragungskanäle der Farbton- und die Ton-Signale zu bündeln, B) in der Empfängereinheit:
- die Bildverarbeitungsmittel außerdem einen Mischer (500) der Licht- und der Farbton-Signale umfassen,
- die beiden unabhängigen Bearbeitungskanäle jeweils Deccdierungsmittel umfassen, eines (600) um das Lichtsignal zu decodieren, das andere (700), um das Farbtonsignal zu decodieren,
- ein Demultiplexer (900) es ermöglicht, die Übertragungskanäle der Farbton- und Ton-Signale zu entbündeln.

3. System gemäß Anspruch 1 oder 2, dadurch gekennzeichnet, daß die Decodierungsmittel (600) des Lichtsignals:
- einen Decodierer (602) umfassen, der das decodierte Lichtsignal bei einer Frequenz F/N liefert,
- einen ersten (604) und einen zweiten (605) Bildspeicher umfassen, in welchen abwechselnd das einem Bild entsprechende Lichtsignal gespeichert wird, wobei diese Speicher abwechselnd beleuchtet werden,
- Kommutationsmittel (603) umfassen, die es ermöglichen, von einem Speicher auf den anderen umzuschalten;
dadurch gekennzeichnet, daß die Decodierungsmittel (700) des Farbtonsignals :
- einen Decodierer (702) umfassen, der das decodierte Farbtonsignal bei einer Frequenz F/Q liefert, wobei Q gleich N sein kann,
- einen ersten (704) und einen zweiten (705) Bildspeicher umfassen, in welchen abwechselnd das einem Bild entsprechende Farbtonsignal gespeichert wird, wobei diese Speicher abwechselnd Q mal beleuchtet werden;
und dadurch gekennzeichnet, daß die Umschaltung von einem Speicher auf den anderen für das Lesen nach der Decodierung eines Lichtsignals und eines Farbtonsignals, die demselben Bild oder einem anderen Bild entsprechen, sich in Phase mit den anderen in Phase emittierten Signalen befindet.

4. System gemäß Anspruch 3, dadurch gekennzeichnet, daß die Zahlen P und Q gleich sind, wobei der Zahl der emittierten "Schwarz-weiß"-Bilder der Zahl der emittierten Farbbilder entspricht.

5. System gemäß Anspruch 3, dadurch gekennzeichnet, daß die Zahlen P und Q verschieden sind, wobei die Zahl Q größer ist als die Zahl P, so daß die Zahl der emittierten Farbbilder größer ist als die Zahl der emittierten "Schwarz-weiß"-Bilder.

6. System gemäß einem der Ansprüche 1 bis 5, dadurch gekennzeichnet, daß die Signalmenge auf jedem Kanal 64 kbit/s beträgt.

7. System gemäß einem der Ansprüche 1 bis 6, dadurch gekennzeichnet, daß die Gesamtmenge der im Kanal übertragenen Farbtonsignale und Tonsignale so verteilt ist, daß man 32 kbit/s für den Farbton und 32 kbit/s für den Ton hat, oder so, daß man 48 kbit/s für den Farbton und 16 kbit/s für den Ton hat.

## Claims

1. Emission-reception signal for the transmission of anomated colour pictures and sound from two independent channels comprising:
A) an emission assembly constituted by image processing means having a camera means (10) and image encoding means (60, 70); sound processing means incorporating a sound recording means (32) and sound encoding means (80),
B) a reception assembly constituted by image processing means incorporating decoding means (600, 700) receiving the transmitted encoded digital signal, image display means (30) and sound processing means incorporating sound encoding (800) and restitution means (30),
C) a transmission assembly (200) incorporating means for the transmission of the digital signal supplied by the emission assembly,
characterized in that:
A) in the emission assembly, the image processing means have independent processing channels, one for the luminance signal and the other for the chrominance signal, the sound signal and the chrominance signal being multiplexed;
B) in the reception assembly, the image processing means have independent processing channels, one for the luminance signal and the other for the chrominance signal, the sound signal and the chrominance signal being demultiplexed;
C) in the transmission assembly, the transmission means have two independent transmission channels (C1, C2), whereof one makes it possible to transmit the luminance signal and whereof the other makes it possible to transmit the multiplexed chrominance and sound signals;
and characterized in that the luminance signal and chrominance signal of an image, emitted in phase, are processed on reception in order to be applied to phase display means.

2. System according to claim 1, characterized in that:
A) in the emission assembly:
the image processing means also incorporate a separator (50) of the luminance and chrominance signals,
the two independent processing channels each having encoding means, one (60) for encoding the luminance signal and the other (70) for encoding the chrominance signal,
a multiplexer (90) for multiplexing the chrominance and dound signals,
B) in the reception assembly:
the image processing means also incorporate a luminance and chrominance signal mixer (500),
the two independent processing channels each have decoding means, one (600) for decoding the luminance signal and the other (700) for decoding the chrominance signal,
a demultiplexer (900) making it possible to demultiplex the chrominance and sound signals.

3. System according to claims 1 or 2, characterized in that the luminance signal decoding means (600) comprise:
a decoder (602) supplying the luminance signal decoded at a frequency F/N,
a first (604) and a second (605) image memories in which are alternatively stored the luminance signal corresponding to an image, said memories being alternatively read,
switching means (603) making it possible to switch from one memory to another;
characterized in that the chrominance signal decoding means (700) comprise:
a decoder (702) supplying the chrominance signal decoded at a frequency F/Q, where Q can be equal to N,
a first (704) and a second (705) image memories in which is alternatively stored in the chrominance signal corresponding to an image, said memories being alternatively read Q times;
and characterized in that the switching from one memory to the other for reading after the decoding of a luminance signal and a chrominance signal corresponding to the same or a different image takes place in phase for signals emitted in phase.

4. System according to claim 3, characterized in that the numbers P and Q are equal, the number of "black and white" images emitted corresponding to the number of colour images emitted.

5. System according to claim 3, characterized in that the numbers P and Q are different, the number Q exceeding the number P, in such a way that the number of emitted colour images exceeds the number of "black and white" images emitted.

6. System according to any one of the claims 1 to 5, characterized in that the rate of the signals on each channel is 64 kbit/s.

7. System according to any one of the claims 1 to 6, characterized in that the total bit rate of the channel carrying the chrominance signal and the sound signal is distributed in such a way as to have 32 kbit/s for the chrominance and 32 kbit/s for the vision, or so as to have 48 kbit/s for the chrominance and 16 kbit/s for the vision.
